# EUROPEAN PATENT APPLICATION

(11) **EP 4 239 748 A1**
(43) Date of publication of application: **06.09.2023**
(21) Application number: 22879573.8
(22) Date of filing: 30.03.2022
(51) Int. Cl.: H01M 10/0567, H01M 4/525, H01M 4/505, H01M 10/052

(54) **RECHARGEABLE LITHIUM BATTERY**

(30) Priority: 20.01.2022 KR 20220008355
(71) Applicant: Samsung SDI Co., Ltd., Yongin-si, Gyeonggi-do 17084 (KR)
(72) Inventor: RA, Hana, Yongin-si, Gyeonggi-do 17084 (KR); LEE, Tae Jin, Yongin-si, Gyeonggi-do 17084 (KR); KIM, Minseo, Yongin-si, Gyeonggi-do 17084 (KR); WOO, Myungheui, Yongin-si, Gyeonggi-do 17084 (KR); PARK, Hyejin, Yongin-si, Gyeonggi-do 17084 (KR); RYU, Bokyung, Yongin-si, Gyeonggi-do 17084 (KR)
(74) Representative: Gulde & Partner
(86) International application number: PCT/KR2022/004543
(87) International publication number: WO 2023/140428

(57) **Abstract**

Provided is a rechargeable lithium battery including an electrolyte including a non-aqueous organic solvent, a lithium salt, and an additive; a positive electrode including a positive electrode active material; and a negative electrode including a negative electrode active material, wherein the additive includes at least one of the first compound and the second compound, the first compound is a substituted or unsubstituted C1 to C20 alkyl group including at least one nitrile group, a substituted or unsubstituted C2 to C20 alkenyl group including at least one nitrile group, a substituted or unsubstituted C2 to C20 alkynyl group including at least one nitrile group, a substituted or unsubstituted C1 to C20 alkoxy group including at least one nitrile group, a substituted or unsubstituted C6 to C20 aryl group including at least one nitrile group, or a combination of thereof, the second compound is cyclic phosphazene, and the positive electrode active material includes cobalt-free lithium nickel manganese-based oxide.

## Description

### [Technical Field]

This disclosure relates to a rechargeable lithium battery.

### [Background Art]

A rechargeable lithium battery may be recharged and has three or more times as high energy density per unit weight as a conventional lead storage battery, nickel-cadmium battery, nickel hydrogen battery, nickel zinc battery and the like. It may be also charged at a high rate and thus, is commercially manufactured for a laptop, a cell phone, an electric tool, an electric bike, and the like, and researches on improvement of additional energy density have been actively made.

In particular, as IT devices become increasingly high-performance, high-capacity batteries are required, wherein the high capacity may be realized by expanding a voltage region to increase energy density, but there is a problem of oxidizing an electrolyte in the high-voltage region and thus deteriorating performance of a positive electrode.

In particular, cobalt-free lithium nickel manganese-based oxide is a positive electrode active material including not cobalt but nickel, manganese, and the like as a main component in its composition, and accordingly, a positive electrode including the same may be economical and realize high energy density and thus draws attentions as a next generation positive electrode active material.

However, when the positive electrode including the cobalt-free lithium nickel manganese-based oxide is used in a high-voltage environment, transition metals may be eluted due to structural collapse of the positive electrode, thereby causing a problem such as gas generation inside a cell, capacity reduction, and the like. This transition metal elution tends to be aggravated in a high-temperature environment, wherein the eluted transition metals are precipitated on the surface of a negative electrode and may cause a side reaction and thereby increase battery resistance and deteriorate battery cycle-life and output characteristics.

Accordingly, when the positive electrode including the cobalt-free lithium nickel manganese-based oxide is used, an electrolyte applicable under high-voltage and high-temperature conditions is required.

### [Disclosure]

### [Technical Problem]

An embodiment provides a rechargeable lithium battery exhibiting improved high-voltage characteristics and high-temperature characteristics by combining a positive electrode including cobalt-free lithium nickel manganese-based oxide with an electrolyte capable of effectively protecting the positive electrode including cobalt-free lithium nickel manganese-based oxide to reduce elution of transition metals under high-voltage and high-temperature conditions and thus to suppress structural collapse of the positive electrode.

### [Technical Solution]

An embodiment provides a rechargeable lithium battery including an electrolyte including a non-aqueous organic solvent, a lithium salt, and an additive; a positive electrode including a positive electrode active material; and a negative electrode including a negative electrode active material,
wherein the additive includes at least one of the first compound and the second compound,
the first compound is a substituted or unsubstituted C1 to C20 alkyl group including at least one nitrile group, a substituted or unsubstituted C2 to C20 alkenyl group including at least one nitrile group, a substituted or unsubstituted C2 to C20 alkynyl group including at least one nitrile group, a substituted or unsubstituted C1 to C20 alkoxy group including at least one nitrile group, a substituted or unsubstituted C6 to C20 aryl group including at least one nitrile group, or a combination of thereof,
the second compound is a cyclic phosphazene, and
the positive electrode active material includes a cobalt-free lithium nickel manganese-based oxide.

The cobalt-free lithium nickel manganese-based oxide may include a lithium composite oxide represented by Chemical Formula 1.

[Chemical Formula 1] LiₐNiₓMn_{y}M1_{z}M2_{w}O_{2-b}X_{b}

In Chemical Formula 1,
0.9 ≤ a < 1.2, 0 ≤ b < 0.1,0 ≤ w < 0.1, 0.6 ≤ x < 1.0, 0 < y < 0.4, 0 < z < 0.1, w + x + y + z = 1,
M1 is one or more elements selected from Al, Mg, Ti, Zr, Cr, Sr, V, B, W, Mo, Ce, Cr, and Nb,
M2 is one or more elements selected from Al, B, Ba, Ca, Ce, Cr, Fe, Mg, Mn, Mo, Nb, Si, Sr, Ti, V, W, and Zr, and X is one or more elements selected from S, F, and P.

Chemical Formula 1 may be represented by Chemical Formula 1-1.

[Chemical Formula 1-1] LiₐNiₓ₁Mn_{y1}Al_{z1}M2_{w1}O_{2-b}X_{b}

In Chemical Formula 1-1,
0.9 ≤ a < 1.2, 0 ≤ b < 0.1, 0 ≤ w1 < 0.1, 0.6 ≤ x1 < 1.0, 0 < y1 < 0.4, 0 < z1 < 0.1, w1 + x1 + y1 + z1 = 1, M2 is one or more elements selected from Al, B, Ba, Ca, Ce, Cr, Fe, Mg, Mn, Mo, Nb, Si, Sr, Ti, V, W, and Zr, and X is one or more elements selected from S, F, and P.

In Chemical Formula 1-1, x1 may be 0.6 ≤ x1 ≤ 0.79, y1 may be 0.2 ≤ y1 ≤ 0.39, and z1 may be 0.01 ≤ 0.01 ≤ z1 < 0.1.

The first compound may be represented by any one of Chemical Formula 2-1 to Chemical Formula 2-3.

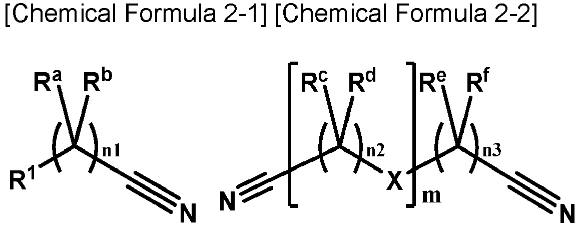

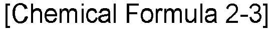

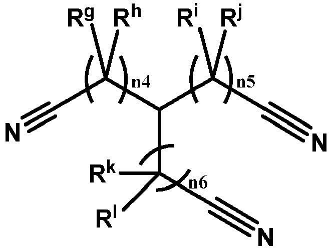

In Chemical Formula 2-1 to Chemical Formula 2-3,
X is a single bond, O, S, C(=O), or S(=O)₂,
R' is a substituted or unsubstituted C1 to C10 alkyl group, a substituted or unsubstituted C2 to C10 alkenyl group, a substituted or unsubstituted C2 to C10 alkynyl group, a substituted or unsubstituted C1 to C10 alkoxy group, a substituted or unsubstituted C6 to C12 aryl group, or a combination thereof,
R^{a}, R^{b}, R^{c}, R^{d}, R^{e}, R^{f}, R^{g}, R^{h}, Rⁱ, R^{j}, R^{k}, and R^{l} are each independently hydrogen, a halogen group, a cyano group, a substituted or unsubstituted C1 to C5 alkyl group, a substituted or unsubstituted C1 to C5 alkoxy group, a substituted or unsubstituted C6 to C12 aryl group, or a combination thereof,
n1 to n6 are each independently an integer from 0 to 10,
n2+n3 ≥ 2, n4+n5+n6 ≥ 1, and
m is one of integers from 1 to 3.

In Chemical Formula 2-1, R¹ may be an unsubstituted C2 to C10 alkenyl group, a C2 to C10 alkenyl group substituted with at least one halogen, an unsubstituted C2 to C10 alkynyl group, a substituted C2 to C10 alkynyl group with at least one halogen, an unsubstituted C6 to C12 aryl group, a C6 to C12 aryl group substituted with at least one halogen, or a C6 to C12 aryl group substituted with at least one C1 to C10 haloalkyl group.

In Chemical Formula 2-1, R¹ may be an unsubstituted C2 to C10 alkenyl group, a C2 to C10 alkenyl group substituted with at least one fluoro, an unsubstituted C2 to C10 alkynyl group, a C2 to C10 alkynyl group substituted with at least one fluoro, an unsubstituted C6 to C12 aryl group, a C6 to C12 aryl group substituted with at least one fluoro, or a C6 to C12 aryl group substituted with a C1 to C10 fluoroalkyl group.

In Chemical Formula 2-2, n2 and n3 may each independently be integers from 1 to 5.

In Chemical Formula 2-3, n4 to n6 may be different integers.

The first compound may be selected from acrylonitrile, succinonitrile, adiponitrile, 3-(trifluoromethyl)benzeneacetonitrile, 3,3'-oxydipropionitrile, 1,3,5-hexanetricarbonitrile, and 1,3,6-hexanetricarbonitrile.

The second compound may be represented by Chemical Formula 3.

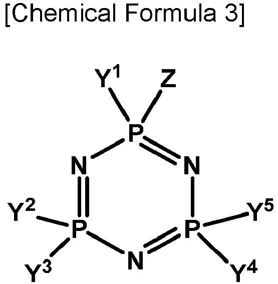

In Chemical Formula 3,
Y¹ to Y⁵ are each independently a halogen group or a halogen-containing group, and
Z is NR²R³ or OR⁴,
wherein R² and R³ are each independently a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C6 to C20 aryl group, a substituted or unsubstituted C3 to C20 heterocycloalkyl group, a substituted or unsubstituted C2 to C30 heteroaryl group, or a combination thereof, and
R⁴ is a substituted or unsubstituted C1 to C20 alkyl group or a substituted or unsubstituted C6 to C20 aryl group.

In Chemical Formula 3, at least one of Y¹ to Y⁵ may be a halogen group.

In Chemical Formula 3, Y¹ to Y⁵ may each be a halogen group.

In Chemical Formula 3, Y¹ to Y⁵ may each be a fluoro group.

In Chemical Formula 3, Z may be NR²R³, wherein R² and R³ may each independently be a substituted or unsubstituted C1 to C10 alkyl group or a substituted or unsubstituted C3 to C10 cycloalkyl group.

In Chemical Formula 3, Z may be OR⁴, wherein R⁴ may be a substituted or unsubstituted C1 to C10 alkyl group or a substituted or unsubstituted C6 to C12 aryl group.

The second compound may be selected from compounds listed in Group 1.

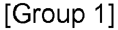

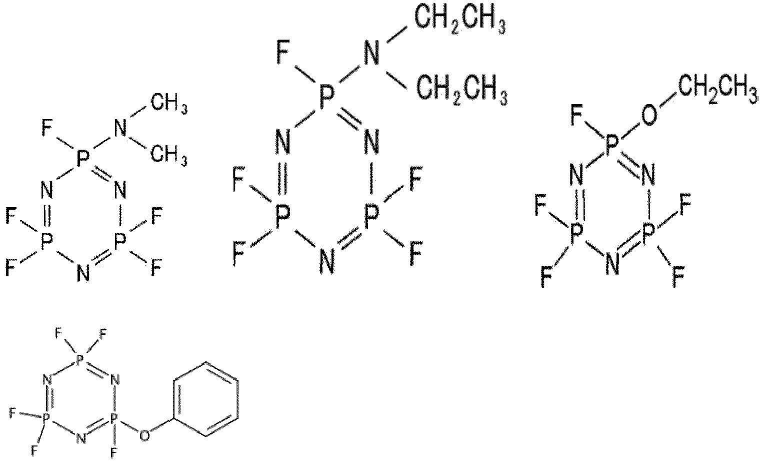

The additive includes the first compound, and the first compound may be included in an amount of 0.1 to 5.0 parts by weight based on 100 parts by weight of the electrolyte.

The additive includes the second compound, and the second compound may be included in an amount of 0.1 to 10 parts by weight based on 100 parts by weight of the electrolyte.

The additive may include the first compound and the second compound, and the first compound and the second compound may be included in an amount of 0.3 to 10 parts by weight based on 100 parts by weight of the electrolyte.

The additive may further include at least one of other additives selected from vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), propene sultone (PST), propane sultone (PS), lithiumtetrafluoroborate (LiBF₄), lithium difluorophosphate (LiPO₂F₂), and 2-fluoro biphenyl (2-FBP).

The negative electrode active material may be graphite or may include a Si composite and graphite together.

The Si composite may include a core including Si-based particles and an amorphous carbon coating layer.

The Si-based particle may include one or more of a Si-C composite, SiOₓ (0 < x ≤ 2), and a Si alloy.

The Si-C composite may include a core including Si particles and crystalline carbon and an amorphous carbon coating layer on the surface of the core, and
an average particle diameter of the Si particles may be 50 nm to 200 nm.

The rechargeable lithium battery can be charged and operated even at a high voltage of 4.4 V or higher.

### [Advantageous Effects]

An embodiment may realize a rechargeable lithium battery exhibiting improved battery stability and cycle-life characteristics by combining a positive electrode including cobalt-free lithium nickel manganese-based oxide with an electrolyte capable of effectively protecting the positive electrode to secure phase transition safety of the positive electrode in a high-temperature high-voltage environment and to suppress decomposition of the electrolyte and a side reaction with electrodes and thus reduce gas generation and simultaneously, suppress an increase in internal battery resistance.

### [Description of the Drawings]

FIG. 1 is a schematic view illustrating a rechargeable lithium battery according to an embodiment of the present invention.
FIG. 2 shows the results of measuring a current by linear sweep voltammetry at a positive electrode including a cobalt-free lithium nickel manganese-based oxide with respect to the electrolyte compositions according to Comparative Example 1 and Examples 1 to 5.
FIG. 3 shows the results of measuring a current by linear sweep voltammetry at a positive electrode including a cobalt-free lithium nickel manganese-based oxide with respect to the electrolyte compositions according to Comparative Example 1 and Examples 6 and 7.
FIG. 4 shows the evaluation results of high-temperature continuous charging at a positive electrode including a cobalt-free lithium nickel manganese-based oxide with respect to the compositions according to Comparative Example 1 and Examples 1 to 5.
FIG. 5 shows the evaluation results of high-temperature continuous charging at a positive electrode including cobalt-free lithium nickel manganese-based oxide with respect to the electrolyte compositions according to Comparative Example 1 and Examples 6 and 7.

### <Description of Symbols>

- 100:: rechargeable lithium battery
- 112:: negative electrode
- 113:: separator
- 114:: positive electrode
- 120:: battery case
- 140:: sealing member

### [Mode for Invention]

Hereinafter, a rechargeable lithium battery according to an embodiment of the present invention will be described in detail with reference to the accompanying drawings. However, these embodiments are exemplary, the present invention is not limited thereto and the present invention is defined by the scope of claims.

In the present specification, unless otherwise defined, "substituted" means that at least one hydrogen in a substituent or compound is deuterium, a halogen group, a hydroxyl group, an amino group, a substituted or unsubstituted C1 to C30 amine group, a nitro group, a substituted or unsubstituted C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, or a combination thereof.

In one example of the present invention, "substituted" refers to replacement of at least one hydrogen in a substituent or compound by deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In one example of the present invention, "substituted" refers to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In addition, in specific examples of the present invention, "substituted" refers to replacement of at least one hydrogen of a substituent or a compound by deuterium, a halogen, a C1 to C5 alkyl group, a C6 to C18 aryl group, a C1 to C5 fluoroalkyl group, or a cyano group. In addition, in specific examples of the present invention, "substituted" refers to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

In the present specification, "aryl group" refers to a group including at least one hydrocarbon aromatic moiety, and all the elements of the hydrocarbon aromatic moiety have p-orbitals which form conjugation, for example a phenyl group, a naphthyl group, and the like, two or more hydrocarbon aromatic moieties may be linked by a sigma bond and may be, for example a biphenyl group, a terphenyl group, a quarterphenyl group, and the like, and two or more hydrocarbon aromatic moieties are fused directly or indirectly to provide a nonaromatic fused ring, for example a fluorenyl group.

The aryl group may include a monocyclic, polycyclic or fused ring polycyclic (i.e., rings sharing adjacent pairs of carbon atoms) functional group.

More specifically, the substituted or unsubstituted C6 to C20 aryl group may be a substituted or unsubstituted phenyl group, a substituted or unsubstituted naphthyl group, a substituted or unsubstituted anthracenyl group, a substituted or unsubstituted phenanthrenyl group, a substituted or unsubstituted naphthacenyl group, a substituted or unsubstituted pyrenyl group, a substituted or unsubstituted biphenyl group, a substituted or unsubstituted p-terphenyl group, a substituted or unsubstituted m-terphenyl group, a substituted or unsubstituted o-terphenyl group, a substituted or unsubstituted chrysenyl group, a substituted or unsubstituted triphenylene group, a substituted or unsubstituted perylenyl group, a substituted or unsubstituted fluorenyl group, or a combination thereof, but is not limited thereto.

A rechargeable lithium battery may be classified into a lithium ion battery, a lithium ion polymer battery, and a lithium polymer battery depending on kinds of a separator and an electrolyte. It also may be classified to be cylindrical, prismatic, coin-type, pouch-type, and the like depending on shape. In addition, it may be bulk type and thin film type depending on sizes. Structures and manufacturing methods for lithium ion batteries pertaining to this disclosure are well known in the art.

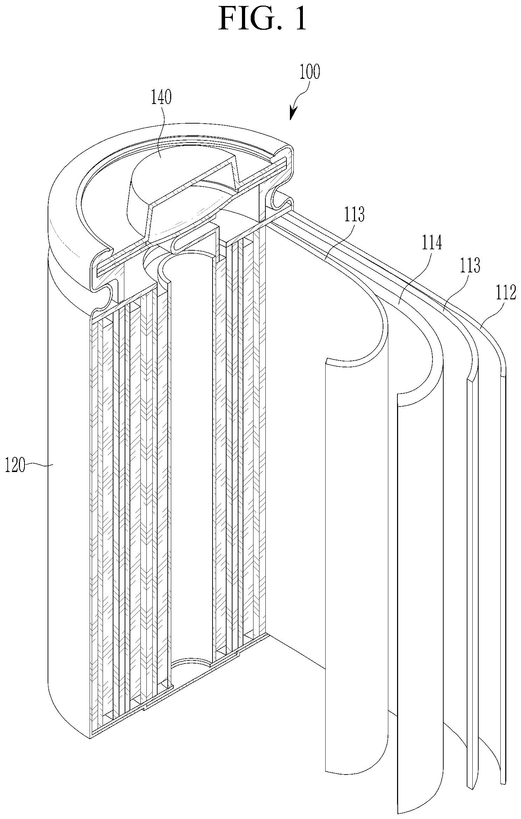

Herein, as an example of a rechargeable lithium battery, a cylindrical rechargeable lithium battery is for example described. FIG. 1 schematically illustrates the structure of a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte (not shown) impregnating the positive electrode 114, negative electrode 112, and separator 113, a battery case 120 housing the battery cell, and a sealing member 140 sealing the battery case 120.

Hereinafter, a more detailed configuration of the rechargeable lithium battery 100 according to an embodiment of the present invention will be described.

The rechargeable lithium battery according to an embodiment of the present invention includes a positive electrode, and a negative electrode.

The electrolyte includes a non-aqueous organic solvent, a lithium salt, and an additive, wherein the additive includes at least one of the first compound and the second compound,
the first compound is a substituted or unsubstituted C1 to C20 alkyl group including at least one nitrile group, a substituted or unsubstituted C2 to C20 alkenyl group including at least one nitrile group, a substituted or unsubstituted C2 to C20 alkynyl group including at least one nitrile group, a substituted or unsubstituted C1 to C20 alkoxy group including at least one nitrile group, a substituted or unsubstituted C6 to C20 aryl group including at least one nitrile group, or a combination of thereof, and
the second compound is cyclic phosphazene.

The first compound has a structure of including at least one nitrile group and may effectively stabilize a structure of the positive electrode to suppress a collapse of the positive electrode structure due to a phase transition, thereby suppressing a side reaction with the electrolyte and thus reducing gas generation due to decomposition of the electrolyte under a high-voltage condition, resultantly preventing the gas generation inside the rechargeable lithium battery along with improving cycle-life characteristics of the rechargeable lithium battery and significantly, reducing a defect rate.

The first compound may be represented by Chemical Formula 2-1 to Chemical Formula 2-3.

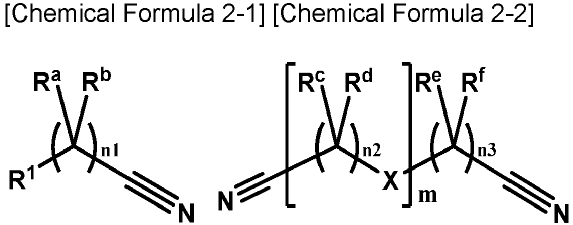

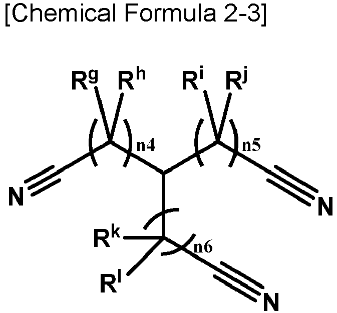

In Chemical Formula 2-1 to Chemical Formula 2-3,
X is a single bond, O, S, C(=O), or S(=O)₂,
R¹ is a substituted or unsubstituted C1 to C10 alkyl group, a substituted or unsubstituted C2 to C10 alkenyl group, a substituted or unsubstituted C2 to C10 alkynyl group, a substituted or unsubstituted C1 to C10 alkoxy group, a substituted or unsubstituted C6 to C12 aryl group, or a combination thereof,
R^{a}, R^{b}, R^{c}, R^{d}, R^{e}, R^{f}, R^{g}, R^{h}, Rⁱ, R^{j}, R^{k}, and R^{l} are each independently hydrogen, a halogen group, a cyano group, a substituted or unsubstituted C1 to C5 alkyl group, a substituted or unsubstituted C1 to C5 alkoxy group, a substituted or unsubstituted C6 to C12 aryl group, or a combination thereof,
n1 to n6 are each independently an integer from 0 to 10,
n2+n3 ≥ 2, n4+n5+n6 ≥ 1, and
m is one of integers from 1 to 3.
n1 to n6 may each independently be integers from 1 to 5, for example, n1 to n6 may each independently be integers from 0 to 3.

For example, n4+n5+n6 ≥ 2,
More specifically, 10 ≥ n2+n3 ≥ 2 and 10 ≥ n4+n5+n6 ≥ 2, for example 6 ≥ n2+n3 ≥ 2, 5 ≥ n2+n3 ≥ 2, or 4 ≥ n2+n3 ≥ 2, and 8 ≥ n4+n5+n6 ≥ 2, 6 ≥ n4+n5+n6 ≥ 2, or 4 ≥ n4+n5+n6 ≥ 2.

For example, in Chemical Formula 2-1, R' may be an unsubstituted C2 to C10 alkenyl group, a C2 to C10 alkenyl group substituted with at least one halogen, an unsubstituted C2 to C10 alkynyl group, a substituted C2 to C10 alkynyl group with at least one halogen, an unsubstituted C6 to C12 aryl group, a C6 to C12 aryl group substituted with at least one halogen, or a C6 to C12 aryl group substituted with at least one C1 to C10 haloalkyl group.

As a specific example, in Chemical Formula 2-1, R' may be an unsubstituted C2 to C10 alkenyl group, a C2 to C10 alkenyl group substituted with at least one fluoro, an unsubstituted C2 to C10 alkynyl group, a C2 to C10 alkynyl group substituted with at least one fluoro, an unsubstituted C6 to C12 aryl group, a C6 to C12 aryl group substituted with at least one fluoro, or a C6 to C12 aryl group substituted with a C1 to C10 fluoroalkyl group.

For example, in Chemical Formula 2-1, R¹ may be a substituted or unsubstituted ethenyl group, a substituted or unsubstituted propenyl group, a substituted or unsubstituted butenyl group, a substituted or unsubstituted pentenyl group, or a substituted or unsubstituted phenyl group, and when substituted, the substituent may be a halogen group or a C1 to C5 haloalkyl group. For example, when substituted, the substituent may be a fluoro group or a trifluoromethyl group.

For example, in Chemical Formula 2-2, n2 and n3 may each independently one of integers from 1 to 5.

As a specific example, in Chemical Formula 2-2, n2 and n3 may each independently one of integers from 1 to 3.

For example, in Chemical Formula 2-2, n2 and n3 may each be the same integer.

For example, in Chemical Formula 2-2, m is one of integers of 1 or 2, and n2 and n3 may each be the same integer.

For example, in Chemical Formula 2-3, n4 to n6 may be different integers.

The first compound may be selected from acrylonitrile, succinonitrile, adiponitrile, 3-(trifluoromethyl)benzeneacetonitrile, 3,3'-oxydipropionitrile 1,3,5-hexanetricarbonitrile and 1,3,6-hexanetricarbonitrile.

The second compound is a cyclic phosphazene and may be represented by Formula 3.

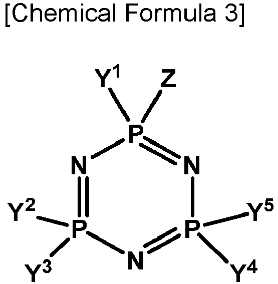

In Chemical Formula 3,
Y¹ to Y⁵ are each independently a halogen group or a halogen-containing group, and
Z is NR²R³ or OR⁴,
wherein R² and R³ are each independently a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C6 to C20 aryl group, a substituted or unsubstituted C3 to C20 heterocycloalkyl group, a substituted or unsubstituted C2 to C30 heteroaryl group, or a combination thereof, and
R⁴ is a substituted or unsubstituted C1 to C20 alkyl group or a substituted or unsubstituted C6 to C20 aryl group.

The second compound includes cyclic phosphazene and thus, may contribute to structural stabilization of the positive electrode, as oxidized and decomposed in a high-voltage region of greater than or equal to 5 V, and also, suppress a side reaction with the electrolyte to reduce gas generation due to decomposition of the electrolyte under the high-voltage condition, resultantly preventing the gas generation inside a rechargeable lithium battery along with improving cycle-life characteristics of the rechargeable lithium battery and thus significantly, reducing a defect rate.

For example, in Chemical Formula 3, at least one of Y¹ to Y⁵ may be a halogen group.

As a specific example, in Chemical Formula 3, Y¹ to Y⁵ may each be a halogen group.

For example, in Chemical Formula 3, Y¹ to Y⁵ may each be a fluoro group.

In an embodiment, in Chemical Formula 3, Z may be NR²R³, wherein R² and R³ may each independently be a substituted or unsubstituted C1 to C10 alkyl group or a substituted or unsubstituted C3 to C10 cycloalkyl group.

In another embodiment, in Chemical Formula 3, Z may be OR⁴,
wherein R⁴ may be a substituted or unsubstituted C1 to C10 alkyl group or a substituted or unsubstituted C6 to C12 aryl group.

In a most specific embodiment, the second compound may be selected from compounds listed in Group 1.

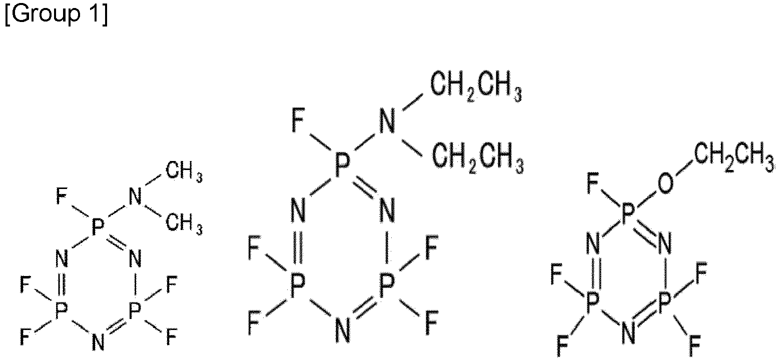

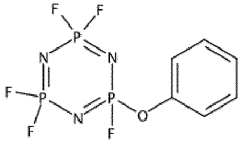

In particular, when the first compound and the second compound are simultaneously included, high-temperature cycle-life characteristics can be further improved. In other words, an effect of protecting the positive electrode by the first compound and also, another effect of protecting the positive electrode due to high-voltage oxidation decomposition caused by the second compound may be simultaneously realized, further improving high-temperature cycle-life characteristics.

For example, the additive may include the first compound, and the first compound may be included in an amount of 0.1 to 5.0 parts by weight, for example, 0.1 to 3.0 parts by weight, or 0.5 to 3.0 parts by weight based on 100 parts by weight of the electrolyte.

For example, the additive may include the second compound, and the second compound may be included in an amount of 0.1 to 10 parts by weight, for example, 0.1 to 5.0 parts by weight, 0.1 to 3.0 parts by weight, or 0.5 to 3.0 parts by weight based on 100 parts by weight of electrolyte.

For example, the additive may include the first compound and the second compound, and the first compound and the second compound may be included in an amount of 0.3 to 10 parts by weight, for example, 0.3 to 6.0 parts by weight, or 0.6 to 5.0 parts by weight based on 100 parts by weight of the electrolyte.

When the amounts of the first compound and the second compound are within the above ranges, a rechargeable lithium battery with improved cycle-life characteristics at high temperatures may be implemented.

Meanwhile, the additive may further include other additives in addition to the aforementioned compounds.

As other additives, it may include at least one of vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene Carbonate, vinylethylene carbonate (VEC), propensultone (PST), propanesultone (PS), lithium tetrafluoroborate (LiBF₄), lithium difluorophosphate (LiPO₂F₂), and 2-fluoro biphenyl (2-FBP).

By further including the other additives, cycle-life may be further improved or gas generated from the positive electrode and negative electrode during high-temperature storage may be effectively controlled.

The other additive may be included in an amount of 0.2 to 20 parts by weight, specifically 0.2 to 15 parts by weight, for example, 0.2 to 10 parts by weight, based on 100 parts by weight of the electrolyte for the rechargeable lithium battery.

When the content of the other additive is as described above the increase in film resistance may be minimized, thereby contributing to the improvement of battery performance.

The non-aqueous organic solvent serves as a medium for transmitting ions taking part in the electrochemical reaction of a battery.

The non-aqueous organic solvent may be a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methyl propionate, ethyl propionate, propyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. In addition, ketone-based solvent may include cyclohexanone, and the like. The alcohol-based solvent may include ethanol, isopropyl alcohol, and the like, and the aprotic solvent may include nitriles such as R-CN (wherein R is a hydrocarbon group having a C2 to C20 linear, branched, or cyclic structure and may include a double bond, an aromatic ring, or an ether bond), and the like, amides such as dimethyl formamide, and the like, dioxolanes such as 1,3-dioxolane, and the like, sulfolanes, and the like.

The non-aqueous organic solvent may be used at alone or in a mixture of one or more. When the organic solvent is used in a mixture, the mixing ratio may be controlled in accordance with a desirable battery performance, which is widely understood by those skilled in the art.

The carbonate-based solvent is prepared by mixing a cyclic carbonate and a chain carbonate. When the cyclic carbonate and chain carbonate are mixed together in a volume ratio of 5:5 to 1:9, a performance of the electrolyte may be improved.

In particular, in an embodiment, the non-aqueous organic solvent may include the cyclic carbonate and the chain carbonate in a volume ratio of 5:5 to 2:8, and as a specific example, the cyclic carbonate and the chain carbonate may be included in a volume ratio of 4:6 to 2:8.

More specifically, the cyclic carbonate and the chain carbonate may be included in a volume ratio of 3:7 to 2:8.

The non-aqueous organic solvent may further include an aromatic hydrocarbon-based organic solvent in addition to the carbonate-based solvent. Herein, the carbonate-based solvent and the aromatic hydrocarbon-based organic solvent may be mixed in a volume ratio of 1:1 to 30:1.

The aromatic hydrocarbon-based organic solvent may be an aromatic hydrocarbon-based compound of Chemical Formula 4.

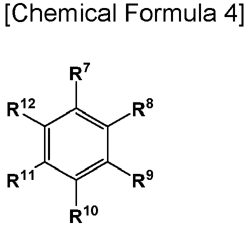

In Chemical Formula 4, R⁷ to R¹² are the same or different and are hydrogen, a halogen, a C1 to C10 alkyl group, a haloalkyl group, or a combination thereof.

Specific examples of the aromatic hydrocarbon-based organic solvent may be benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The lithium salt dissolved in the non-organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, lithium difluoro(oxalato)borate (LiDFOB), LiPO₂F₂, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiN(CₓF₂ₓ₊₁SO₂)(C_{y}F_{2y+1}SO₂) (wherein x and y are natural numbers, for example an integer of 1 to 20), LiCl, Lil, and LiB(C₂O₄)₂ (lithium bis(oxalato) borate: LiBOB). The lithium salt may be used in a concentration ranging from 0.1 M to 2.0 M. When the lithium salt is included at the above concentration range, an electrolyte may have excellent performance and lithium ion mobility due to optimal electrolyte conductivity and viscosity.

The positive electrode includes a positive electrode current collector and a positive electrode active material layer formed on the positive electrode current collector, and the positive electrode active material layer includes a positive electrode active material.

The positive electrode active material may include a cobalt-free lithium nickel manganese-based oxide.

In the present disclosure, the cobalt-free lithium nickel manganese-based oxide as a positive electrode active material means a positive electrode active material composed mainly of nickel, manganese, etc. without including cobalt in the composition of the positive electrode active material.

For example, the cobalt-free lithium nickel manganese-based oxide may include a lithium composite oxide represented by Chemical Formula 1.

[Chemical Formula 1] LiₐNiₓMn_{y}M1_{z}M2_{w}O_{2-b}X_{b}

In Chemical Formula 1,
0.9 ≤ a < 1.2, 0 ≤ b < 0.1,0 ≤ w < 0.1, 0.6 ≤ x < 1.0, 0 < y < 0.4, 0 < z < 0.1, w + x + y + z = 1,
M1 is one or more elements selected from Al, Mg, Ti, Zr, Cr, Sr, V, B, W, Mo, Ce, Cr, and Nb,
M2 is one or more elements selected from Al, B, Ba, Ca, Ce, Cr, Fe, Mg, Mn, Mo, Nb, Si, Sr, Ti, V, W, and Zr, and X is one or more elements selected from S, F, and P.

The lithium composite oxide may have a coating layer on the surface, or the lithium composite oxide may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, K, Na, Ca, Si, Ti, V, Sn, Ge, Ga, B, As, Zr, or a mixture thereof. The coating process may include any conventional processes as long as it does not cause any side effects on the properties of the positive electrode active material (e.g., inkjet coating, dipping), which is well known to persons having ordinary skill in this art, so a detailed description thereof is omitted.

For example, the Chemical Formula 1 may be represented by Chemical Formula 1-1.

[Chemical Formula 1-1] LiₐNiₓ₁Mn_{y1}Al_{z1}M2_{w1}O_{2-b}X_{b}

In Chemical Formula 1-1,
0.9 ≤ a < 1.2, 0 ≤ b < 0.1, 0 ≤ w1 < 0.1, 0.6 ≤ x1 < 1.0, 0 < y1 < 0.4, 0 < z1 < 0.1, w1 + x1 + y1 + z1 = 1, M2 is one or more elements selected from Al, B, Ba, Ca, Ce, Cr, Fe, Mg, Mn, Mo, Nb, Si, Sr, Ti, V, W, and Zr, and X is one or more elements selected from S, F, and P.

In an embodiment, in Chemical Formula 1-1, 0.6 ≤ x1 ≤ 0.9, 0.1 ≤ y1 ≤ 0.4, and 0 ≤ z1 ≤ 0.1, and 0.6 **≤** x1 ≤ 0.8, 0.2 ≤ y1 ≤ 0.4, and 0 ≤ z1 ≤ 0.1.

For example, in Chemical Formula 1-1, x1 may be 0.6 ≤ x1 ≤ 0.79, y1 may be 0.2 ≤ y1 ≤ 0.39, and z1 may be 0.01 ≤ z1 < 0.1.

The content of the positive electrode active material may be 90 wt% to 98 wt% based on the total weight of the positive electrode active material layer.

In an embodiment, the positive electrode active material layer may include a binder. The content of the binder may be 1 wt% to 5 wt% based on the total weight of the positive electrode active material layer.

The binder improves binding properties of positive electrode active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The positive electrode current collector may include Al, but is not limited thereto.

The negative electrode includes a negative electrode current collector and a negative electrode active material layer including a negative electrode active material formed on the negative electrode current collector.

The negative electrode active material may include a material that reversibly intercalates/deintercalates lithium ions, a lithium metal, a lithium metal alloy, a material being capable of doping/dedoping lithium, or transition metal oxide.

The material that reversibly intercalates/deintercalates lithium ions includes carbon materials. The carbon material may be any generally-used carbon-based negative electrode active material in a rechargeable lithium ion battery. Examples of the carbon material may include crystalline carbon, amorphous carbon, and a combination thereof. The crystalline carbon may be non-shaped, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material being capable of doping/dedoping lithium may be a Si-based compound, for example Si, a Si-C composite, SiOₓ (0 < x < 2), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, but not Si), Sn, SnO₂, Sn-R (wherein R is an element selected from an alkali metal, an alkaline-earth metal, a Group 13 element, a Group 14 element, a Group 15 element, a Group 16 element, a transition metal, a rare earth element, and a combination thereof, but not Sn), and the like. At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The transition metal oxide may be a vanadium oxide, a lithium vanadium oxide, and the like.

In an embodiment, the negative electrode active material may be graphite or may include a Si composite and graphite together.

When the negative electrode active material includes the Si composite and graphite together, the Si composite and graphite may be included in the form of a mixture, and the Si composite and graphite may be included in a weight ratio of 1:99 to 50:50. More specifically, the Si composite and graphite may be included in a weight ratio of 3: 97 to 20: 80 or 5: 95 to 20: 80.

The Si composite may include a core including Si-based particles and an amorphous carbon coating layer. For example, the Si-based particles may include at least one of a Si-C composite, SiOₓ (0 < x ≤ 2), and a Si alloy. For example, the Si-C composite may include a core including Si particles and crystalline carbon, and an amorphous carbon coating layer on the surface of the core.

In the Si-C composite, an average particle diameter of the Si particles may be 50 nm to 200 nm.

When the average particle diameter of the Si particles is within the above ranges, volume expansion occurring during charging and discharging may be suppressed, and interruption of a conductive path due to particle crushing during charging and discharging may be prevented.

The Si particles may be included in an amount of 1 wt% to 60 wt%, for example, 3 wt% to 60 wt%, based on the total weight of the Si-C composite.

The crystalline carbon may include, for example, graphite, and more specifically, natural graphite, artificial graphite, or a mixture thereof.

An average particle diameter of the crystalline carbon may be 5 µm to 30 µm.

In the present specification, an average particle diameter may be a particle size (D50) at a volume ratio of 50% in a cumulative size-distribution curve.

The amorphous carbon precursor may be a coal-based pitch, mesophase pitch, petroleum-based pitch, coal-based oil, petroleum-based heavy oil, or a polymer resin such as a phenol resin, a furan resin, or a polyimide resin.

The amorphous carbon may be included in an amount of 1 to 50 parts by weight, for example, 5 to 50 parts by weight, or 10 to 50 parts by weight based on 100 parts by weight of the crystalline carbon.

In the negative electrode active material layer, the negative electrode active material may be included in an amount of 95 wt% to 99 wt% based on the total weight of the negative electrode active material layer.

In an embodiment, the negative electrode active material layer may include a binder, and optionally a conductive material. The content of the binder in the negative electrode active material layer may be 1 wt% to 5 wt% based on the total weight of the negative electrode active material layer. In addition, when the conductive material is further included, 90 wt% to 98 wt% of the negative electrode active material, 1 wt% to 5 wt% of the binder, and 1 wt% to 5 wt% of the conductive material may be used.

The binder improves binding properties of negative electrode active material particles with one another and with a current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, ethylenepropyleneco polymer, polyethylene oxide, polyvinylpyrrolidone, polyepichlorohydrine, polyphosphazene, polyacrylonitrile, polystyrene, an ethylene propylene diene copolymer, polyvinylpyridine, chlorosulfonated polyethylene, latex, a polyester resin, an acrylic resin, a phenolic resin, an epoxy resin, polyvinyl alcohol, or a combination thereof.

When the water-soluble binder is used as a negative electrode binder, a cellulose-based compound may be further used to provide viscosity. The cellulose-based compound includes one or more of carboxymethyl cellulose, hydroxypropylmethyl cellulose, methyl cellulose, or alkali metal salts thereof. The alkali metal may be Na, K, or Li. Such a thickener may be included in an amount of 0.1 parts by weight to 3 parts by weight based on 100 parts by weight of the negative electrode active material.

The conductive material is included to improve electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The negative electrode current collector may be selected from a copper foil, a nickel foil, a stainless-steel foil, a titanium foil, a nickel foam, a copper foam, a polymer substrate coated with a conductive metal, and a combination thereof.

The rechargeable lithium battery may further include a separator between the negative electrode and the positive electrode, depending on a type of the battery. Examples of a suitable separator material include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The rechargeable lithium battery may be capable of being charged and operating at a high voltage of 4.4 V or more, for example, 4.4 V to 4.45 V.

### DETAILED DESCRIPTION OF THE EMBODIMENTS

Hereinafter, examples of the present invention and comparative examples are described. These examples, however, are not in any sense to be interpreted as limiting the scope of the invention.

### Manufacture of Rechargeable Lithium Battery Cell

### Example 1

LiNi_{0.75}Mno_{0.23}Al_{0.02}O₂ as a positive electrode active material, polyvinylidene fluoride as a binder, and acetylene black as a conductive material were mixed in a weight ratio of 96:3:1 and then, dispersed in N-methyl pyrrolidone, preparing positive electrode active material slurry.

The positive electrode active material slurry was coated on a 15 µm-thick Al foil, dried at 100 °C, and pressed, manufacturing a positive electrode.

Negative electrode active material slurry was also prepared by using a mixture of artificial graphite and Si-C composite in a weight ratio of 93:7 as a negative electrode active material and then, mixing the negative electrode active material, a styrene-butadiene rubber binder, and carboxylmethyl cellulose in a weight ratio of 98:1:1 and dispersing the obtained mixture in distilled water.

As for the Si-C composite, a core including artificial graphite and silicon particles was coated with coal-based pitch on the surface.

The negative electrode active material slurry was coated on a 10 µm-thick Cu foil, dried at 100 °C, and pressed, manufacturing a negative electrode.

The manufactured positive and negative electrodes were assembled with a 10 µm-thick polyethylene separator to manufacture an electrode assembly, and an electrolyte was injected thereinto, manufacturing a rechargeable lithium battery cell.

The electrolyte had a composition as follows.

### (Composition of electrolyte)

Salt: 1.15 M LiPF₆
Solvent: ethylene carbonate: ethylmethyl carbonate: dimethyl carbonate (EC:EMC:DMC= a volume ratio of 20:40:40)
Additive: 1 part by weight of 1,3,6-hexanetricarbonitrile
Other additives: 3 parts by weight of fluoroethylene carbonate (FEC)
(However, in the composition of the electrolyte, "parts by weight" means a relative weight of additives based on 100 weight of the total electrolyte (lithium salt + non-aqueous organic solvent))

### Examples 2 to 7 and Comparative Example 1

A rechargeable lithium battery was manufactured in the same manner as in Example 1, except that the electrolyte was prepared by changing the additives as shown in Table 1.

**(Table 1)**

| | Composition |
|---|---|
| Comparative Example 1 | 1.15 M LiPF₆, EC/EMC/DMC = 2/4/4 (v/v/v), FEC 1 part by weight |
| Example 1 | 1.15 M LiPF₆, EC/EMC/DMC = 2/4/4 (v/v/v), FEC 3 parts by weight, HTCN 1 part by weight |
| Example 2 | 1.15 M LiPF₆, EC/EMC/DMC = 2/4/4 (v/v/v), FEC 3 parts by weight, SN 1 part by weight |
| Example 3 | 1.15 M LiPF₆, EC/EMC/DMC=2/4/4 (v/v/v), FEC 3 parts by weight |
| | ODT 1 part by weight |
| Example 4 | 1.15 M LiPF₆, EC/EMC/DMC = 2/4/4 (v/v/v), FEC 3 parts by weight, AC 1 part by weight |
| Example 5 | 1.15 M LiPF₆, EC/EMC/DMC = 2/4/4 (v/v/v), FEC 3 parts by weight, 3-TFBA 1 part by weight |
| Example 6 | 1.15 M LiPF₆, EC/EMC/DMC = 2/4/4 (v/v/v), FEC 3 parts by weight, PFPN 1 part by weight |
| Example 7 | 1.15 M LiPF₆, EC/EMC/DMC = 2/4/4 (v/v/v), FEC 3 parts by weight, PFDN 1 part by weight |

| | |
|---|---|
| HTCN: 1,3,6-Hexanetricarbonitrile SN: Succinonitrile ODT: 3,3'-Oxydipropinonitrile AC: Acrylonitrile 3-TFBA: 3-(Trifluoromethyl)benzeneacetonitrile PFPN: Pentafluorophenoxycyclotriphosphazene PFDN: Pentafluorodimethylaminocyclotriphosphazene FEC: Fluoroethylene carbonate | |

### Examples 8 to 15 and Comparative Examples 2 to 11

Rechargeable lithium battery cells according to Examples 8 to 15 were manufactured in the same manner as in Example 1 except that the additive composition was changed as shown in Table 2.

In addition, rechargeable lithium battery cells according to Comparative Examples 5 to 12 were manufactured respectively in the same manner as in Examples 1 to 7 and Comparative Example 1 except that the positive electrode active material was changed into LiNi_{0.6}Co_{0.2}Mn_{0.2}. Each specific composition is shown in Table 2.

**(Table 2)**

| | Composition of electrolyte | Positive electrode active material |
|---|---|---|
| Comparative Example 2 | 1.15 M LiPF₆, EC/EMC/DMC=2/4/4 | LiNi_{0.75}Mn_{0.23}Al_{0.02}O₂ |
| | (v/v/v), FEC 3 parts by weight | |
| Comparative Example 3 | 1.15 M LiPF₆, EC/EMC/DMC=2/4/4 | |
| | (v/v/v), FEC 3 parts by weight | |
| | PS 3 parts by weight | |
| Example 8 | 1.15 M LiPF₆, EC/EMC/DMC=2/4/4 | |
| | (v/v/v), FEC 3 parts by weight | |
| | HTCN 3 parts by weight | |
| Example 9 | 1.15 M LiPF₆, EC/EMC/DMC=2/4/4 | |
| | (v/v/v), FEC 3 parts by weight | |
| | SN 3 parts by weight | |
| Example 10 | 1.15 M LiPF₆, EC/EMC/DMC=2/4/4 | |
| | (v/v/v), FEC 3 parts by weight | |
| | ODT 3 parts by weight | |
| Example 11 | 1.15 M LiPF₆, EC/EMC/DMC=2/4/4 | |
| | (v/v/v), FEC 3 parts by weight | |
| | AC 3 parts by weight | |
| Example 12 | 1.15 M LiPF₆, EC/EMC/DMC=2/4/4 | |
| | (v/v/v), FEC 3 parts by weight | |
| | 3-TFBA 3 parts by weight | |
| Example 13 | 1.15 M LiPF₆, EC/EMC/DMC=2/4/4 | |
| | (v/v/v), FEC 3 parts by weight | |
| | PFPN 3 parts by weight | |
| Example 14 | 1.15 M LiPF₆, EC/EMC/DMC=2/4/4 | |
| | (v/v/v), FEC 3 parts by weight | |
| | PFDN 3 parts by weight | |
| Example 15 | 1.15 M LiPF₆, EC/EMC/DMC=2/4/4 | |
| | (v/v/v), FEC 3 parts by weight | |
| | HTCN 1.5 parts by weight + PFPN 1.5 parts by weight | |
| Comparative Example 4 | 1.15 M LiPF₆, EC/EMC/DMC=2/4/4 | LiNi_{0.6}Co_{0.2}Mn_{0.2} |
| | (v/v/v) FEC 3 parts by weight | |
| Comparative Example 5 | 1.15 M LiPF₆, EC/EMC/DMC=2/4/4 | |
| | (v/v/v), FEC 3 parts by weight | |
| | HTCN 3 parts by weight | |
| Comparative Example 6 | 1.15 M LiPF₆, EC/EMC/DMC=2/4/4 | |
| | (v/v/v), FEC 3 parts by weight | |
| | SN 3 parts by weight | |
| Comparative Example 7 | 1.15 M LiPF₆, EC/EMC/DMC=2/4/4 | |
| | (v/v/v), FEC 3 parts by weight | |
| | ODT 3 parts by weight | |
| Comparative Example 8 | 1.15 M LiPF₆, EC/EMC/DMC=2/4/4 | |
| | (v/v/v), FEC 3 parts by weight | |
| | AC 3 parts by weight | |
| Comparative Example 9 | 1.15 M LiPF₆, EC/EMC/DMC=2/4/4 | |
| | (v/v/v), FEC 3 parts by weight | |
| | 3-TFBA 3 parts by weight | |
| Comparative Example 10 | 1.15 M LiPF₆, EC/EMC/DMC=2/4/4 | |
| | (v/v/v), FEC 3 parts by weight | |
| | PFPN 3 parts by weight | |
| Comparative Example 11 | 1.15 M LiPF₆, EC/EMC/DMC=2/4/4 | |
| | (v/v/v), FEC 3 parts by weight | |
| | PFDN 3 parts by weight | |

| | | |
|---|---|---|
| PS: propane sultone | | |

### Evaluation 1: Evaluation of Linear sweep voltammetry

Linear sweep voltammetry is a method of measuring a current, while changing a voltage of a working electrode at a constant rate from an initial voltage, and herein, a positive electrode including cobalt-free positive electrode active material (LiNi_{0.75}Mn_{0.23}Al_{0.02}) was used as an operation electrode, and Li metal was used as a counter electrode and a reference electrode.

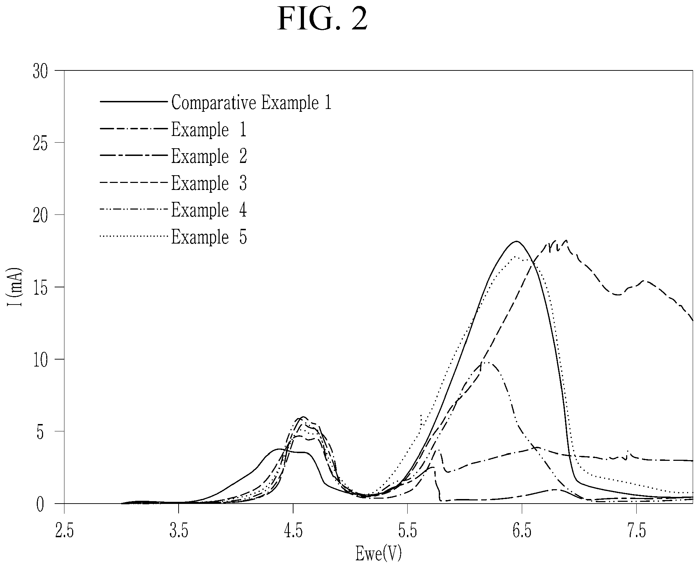

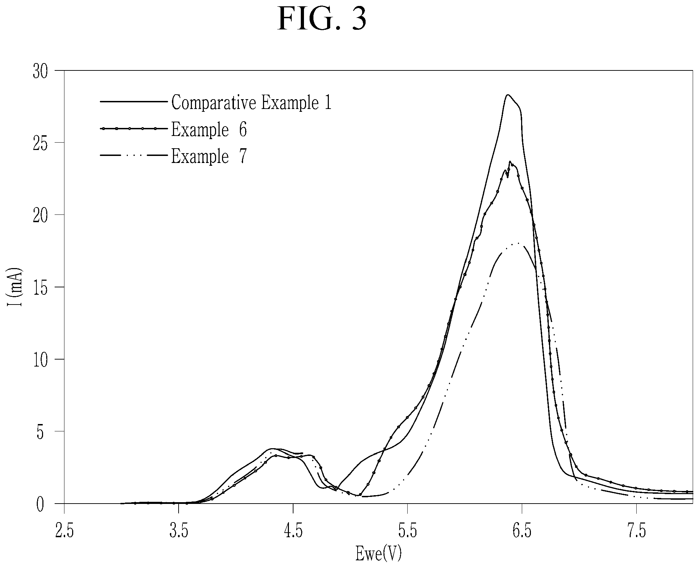

In addition, the evaluation was performed within a voltage region of 3.0 V to 8.0 V at a scan rate of 0.1 mV/sec, and the results of the electrolytes according to Examples 1 to 7 and Comparative Example 1 are shown in FIGS. 2 and 3.

FIG. 2 shows the results of measuring a current by the linear sweep voltammetry at the cobalt-free positive electrode with respect to the electrolyte compositions according to Comparative Example 1 and Examples 1 to 5.

FIG. 3 shows the results of measuring a current by the linear sweep voltammetry at the cobalt-free positive electrode with respect to the electrolyte compositions according to Comparative Example 1 and Examples 6 and 7.

Referring to FIG. 2, in the electrolyte compositions according to Examples 1 to 5, a positive electrode phase-transition voltage shifted to a high region, and Referring to FIG. 3, in the electrolyte compositions according to Examples 6 and 7, a positive electrode was oxidized in a high-voltage region of greater than or equal to 5 V.

### Evaluation 2: Evaluation of High-temperature Continuous Charging

A method of evaluating high-temperature continuous charging is to maintain a constant voltage continuously by applying a current to a fully charged battery cell after formation to evaluate structural stability of a positive electrode in a high-voltage region.

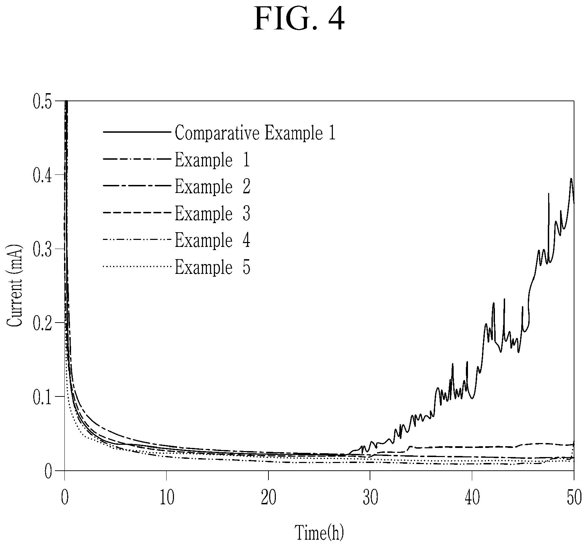

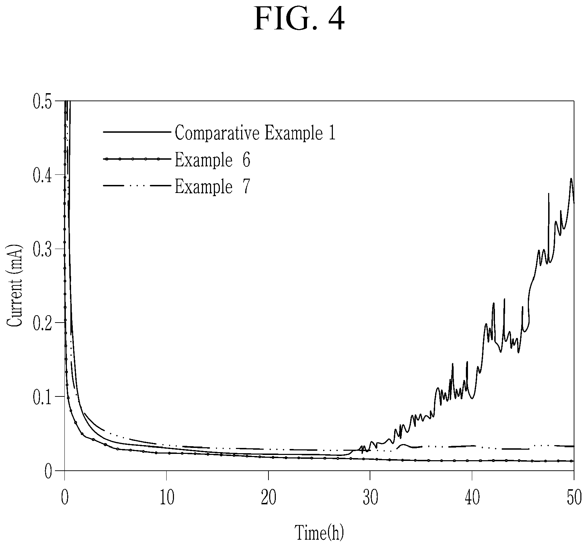

Each 2032 standard positive electrode coin half-cell was assembled respectively to include the compositions according to Examples 1 to 7 and Comparative Example 1 and then, maintained at 4.55 V in a chamber of 60° C in a full charged state after formation by continuously applying a current for 50 hours, and a leak current is shown to evaluate structural stability of a positive electrode. The evaluation results are shown in FIGS. 4 and 5.

FIG. 4 shows the evaluation results of the high-temperature continuous charging at a cobalt-free positive electrode with respect to the electrolyte compositions according to Comparative Example 1 and Examples 1 to 5.

FIG. 5 shows the evaluation results of the high temperature continuous charging at a cobalt-free positive electrode with respect to the electrolyte compositions according to Comparative Example 1 and Examples 6 and 7.

Referring to FIGS. 4 and 5, the electrolyte compositions according to Examples 1 to 7 suppressed an increase in a leak current even at the high temperature continuous charging, which has confirmed that an electrolyte composition according to the present invention contributes to structural stabilization of the cobalt-free positive electrode.

### Evaluation 3: Evaluation of Metal (Mn) Elution Amount

The rechargeable lithium battery cells according to Examples 8 to 14 and Comparative Examples 2 and 4 to 11 were full-charged, stored at a high temperature of 60° C for 90 days after fully charged, and checked with respect to an Mn elution amount in an electrolyte by using ICP-AES. The results for cobalt-free positive electrodes are shown in Table 3 (Examples 8 to 14 and Comparative Example 2), and the results for an NCM-based positive electrode are shown in Table 4 (Comparative Examples 4 to 11).

**(Table 3)**

| | | |
|---|---|---|
| | Mn elution amount (ppm) | Mn elution ratio (%) |

| | | |
|---|---|---|
| Comparative Example 2 | 1150 | 100 |
| Example 8 | 320 | 27.8 |
| Example 9 | 380 | 33.0 |
| Example 10 | 400 | 34.8 |
| Example 11 | 450 | 39.1 |
| Example 12 | 430 | 37.4 |
| Example 13 | 390 | 33.9 |
| Example 14 | 510 | 44.3 |

**(Table 4)**

| | Mn elution amount (ppm) | Mn elution ratio (%) |
|---|---|---|
| Comparative Example 4 | 325 | 100 |
| Comparative Example 5 | 300 | 92.3 |
| Comparative Example 6 | 315 | 96.9 |
| Comparative Example 7 | 332 | 102 |
| Comparative Example 8 | 340 | 105 |
| Comparative Example 9 | 329 | 101 |
| Comparative Example 10 | 305 | 93.8 |
| Comparative Example 11 | 345 | 106 |

Referring to Table 3, as for the cobalt-free positive electrode, when an Mn elution amount in a composition including no additive (Comparative Example 2) was 100, in a composition including an additive according to the present invention (Examples 8 to 14), the Mn elution amount was less than 50%, which has confirmed that when an additive according to the present invention was included in a cobalt-fee positive electrode, there was a remarkable effect of reducing a transition metal elution amount.

On the other hand, as for the NCM-based positive electrode with the same electrolyte composition, when the Mn elution amount was 100 in a composition including no additive (Comparative Example 4), the compositions including the additive according to the present invention (Comparative Examples 5 to 11) exhibited an Mn elution amount of greater than or equal to 90% or a much higher elution amount than the composition including no additive, resultantly, exhibiting almost no effect of reducing the transition metal elution amount by including the additive according to the present invention in the NCM-based positive electrode.

Accordingly, the electrolyte composition according to the present invention contributed to structural stabilization of a positive electrode, particularly, a cobalt-free positive electrode, significantly improving the effect of reducing a transition metal elution amount.

### Evaluation 4: Evaluation of High-temperature Cycle-life Characteristics

The rechargeable lithium battery cells according to Examples 8 to 15 and Comparative Examples 2 and 3 were charged under conditions of 0.33 C 4.45 V and 0.05 C CC-CV C/O at a high temperature (60° C) and discharged under conditions of 1.0 C 2.5 V and then, measured with respect to discharge capacity, while 200 cycles charged and discharged to calculate a ratio of the discharge capacity at the 200^{th} cycle to discharge capacity at the 1^{st} cycle (capacity retention), and the results are shown in Table 5.

**(Table 5)**

| | capacity retention (%), 60° C 200 cycles |
|---|---|
| Comparative Example 2 | 55 |
| Comparative Example 3 | 68 |
| Example 8 | 87 |
| Example 9 | 85 |
| Example 10 | 79 |
| Example 11 | 80 |
| Example 12 | 84 |
| Example 13 | 84 |
| Example 14 | 80 |
| Example 15 | 87 |

Referring to Table 5, compared with Comparative Example 2 including no additive and Comparative Example 3 including other types of an additive, the additive compositions according to the present invention exhibited improved high-temperature cycle-life characteristics.

In particular, the additive composition simultaneously including the first compound and the second compound according to the present invention (Example 15) exhibited much improved effects.

While this invention has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims.

## Claims

1. A rechargeable lithium battery, comprising
an electrolyte including a non-aqueous organic solvent, a lithium salt, and an additive;
a positive electrode including a positive electrode active material; and
a negative electrode including a negative electrode active material,
wherein the additive includes at least one of a first compound and a second compound,
the first compound is a substituted or unsubstituted C1 to C20 alkyl group including at least one nitrile group, a substituted or unsubstituted C2 to C20 alkenyl group including at least one nitrile group, a substituted or unsubstituted C2 to C20 alkynyl group including at least one nitrile group, a substituted or unsubstituted C1 to C20 alkoxy group including at least one nitrile group, a substituted or unsubstituted C6 to C20 aryl group including at least one nitrile group, or a combination of thereof,
the second compound is a cyclic phosphazene, and
the positive electrode active material includes a cobalt-free lithium nickel manganese-based oxide.

2. The rechargeable lithium battery of claim 1, wherein
the cobalt-free lithium nickel manganese-based oxide includes a lithium composite oxide represented by Chemical Formula 1:
[Chemical Formula 1] LiₐNiₓMn_{y}M1_{z}M2_{w}O_{2-b}X_{b}
wherein, in Chemical Formula 1,
0.9 ≤ a < 1.2, 0 ≤ b < 0.1,0 ≤ w < 0.1, 0.6 ≤ x < 1.0, 0 < y < 0.4, 0 < z < 0.1, w + x + y + z = 1,
M1 is one or more elements selected from Al, Mg, Ti, Zr, Cr, Sr, V, B, W, Mo, Ce, Cr, and Nb,
M2 is one or more elements selected from Al, B, Ba, Ca, Ce, Cr, Fe, Mg, Mn, Mo, Nb, Si, Sr, Ti, V, W, and Zr, and X is one or more elements selected from S, F, and P.

3. The rechargeable lithium battery of claim 2, wherein
Chemical Formula 1 is represented by Chemical Formula 1-1:
[Chemical Formula 1-1] LiₐNiₓ₁Mn_{y1}Al_{z1}M2_{w1}O_{2-b}X_{b}
wherein, in Chemical Formula 1-1,
0.9 ≤ a < 1.2, 0 ≤ b < 0.1, 0 ≤ w1 < 0.1, 0.6 ≤ x1 < 1.0, 0 < y1 < 0.4, 0 < z1 < 0.1, w1 + x1 + y1 + z1 = 1, M2 is one or more elements selected from Al, B, Ba, Ca, Ce, Cr, Fe, Mg, Mn, Mo, Nb, Si, Sr, Ti, V, W, and Zr, and X is one or more elements selected from S, F, and P.

4. The rechargeable lithium battery of claim 3, wherein
in Chemical Formula 1-1, x1 is 0.6 ≤ x1 ≤ 0.79, y1 is 0.2 ≤ y1 ≤ 0.39, and z1 is 0.01 ≤ z1 < 0.1.

5. The rechargeable lithium battery of claim 1, wherein
the first compound is represented by any one of Chemical Formula 2-1 to Chemical Formula 2-3: 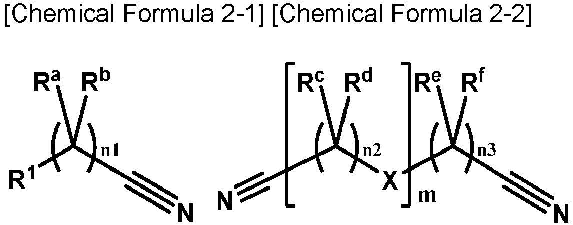 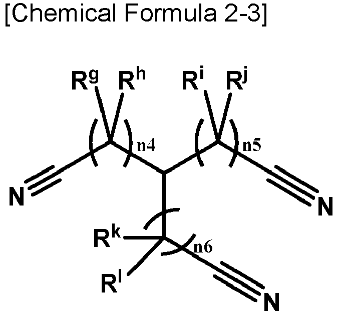 wherein, in Chemical Formula 2-1 to Chemical Formula 2-3,
X is a single bond, O, S, C(=O), or S(=O)₂,
R¹ is a substituted or unsubstituted C1 to C10 alkyl group, a substituted or unsubstituted C2 to C10 alkenyl group, a substituted or unsubstituted C2 to C10 alkynyl group, a substituted or unsubstituted C1 to C10 alkoxy group, a substituted or unsubstituted C6 to C12 aryl group, or a combination thereof, and
R^{a}, R^{b}, R^{c}, R^{d}, R^{e}, R^{f}, R^{g}, R^{h}, Rⁱ, R^{j}, R^{k}, and R^{l} are each independently hydrogen, a halogen group, a cyano group, a substituted or unsubstituted C1 to C5 alkyl group, a substituted or unsubstituted C1 to C5 alkoxy group, a substituted or unsubstituted C6 to C12 aryl group, or a combination thereof, and
n1 to n6 are each independently an integer from 0 to 10, and
n2+n3 ≥ 2, n4+n5+n6 ≥ 1, and
m is one of integers from 1 to 3.

6. The rechargeable lithium battery of claim 5, wherein
in Chemical Formula 2-1, R¹ is an unsubstituted C2 to C10 alkenyl group, a C2 to C10 alkenyl group substituted with at least one halogen, an unsubstituted C2 to C10 alkynyl group, a substituted C2 to C10 alkynyl group with at least one halogen, an unsubstituted C6 to C12 aryl group, a C6 to C12 aryl group substituted with at least one halogen, or a C6 to C12 aryl group substituted with at least one C1 to C10 haloalkyl group.

7. The rechargeable lithium battery of claim 5, wherein
in Chemical Formula 2-1, R¹ is an unsubstituted C2 to C10 alkenyl group, a subitituted C2 to C10 alkenyl group with at least one fluoro, an unsubstituted C2 to C10 alkynyl group, a C2 to C10 alkynyl group substituted with at least one fluoro, an unsubstituted C6 to C12 aryl group, a C6 to C12 aryl group substituted with at least one fluoro, or a C6 to C12 aryl group substituted with a C1 to C10 fluoroalkyl group.

8. The rechargeable lithium battery of claim 5, wherein
in Chemical Formula 2-2, n2 and n3 are each independently integers from 1 to 5.

9. The rechargeable lithium battery of claim 5, wherein
in Chemical Formula 2-3, n4 to n6 are different integers.

10. The rechargeable lithium battery of claim 1, wherein
the first compound is any one selected from acrylonitrile, succinonitrile, adiponitrile, 3-(trifluoromethyl)benzeneacetonitrile, 3,3'-oxydipropionitrile, 1,3,5-hexanetricarbonitrile, and 1,3,6-hexanetricarbonitrile.

11. The rechargeable lithium battery of claim 1, wherein
the second compound is represented by Chemical Formula 3: 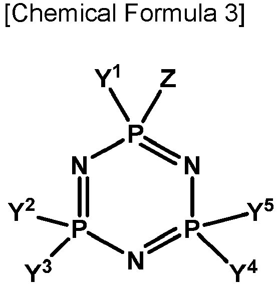 wherein, in Chemical Formula 3,
Y¹ to Y⁵ are each independently a halogen group or a halogen-containing group, and
Z is NR²R³ or OR⁴,
wherein R² and R³ are each independently a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C6 to C20 aryl group, a substituted or unsubstituted C3 to C20 heterocycloalkyl group, a substituted or unsubstituted C2 to C30 heteroaryl group, or a combination thereof, and
R⁴ is a substituted or unsubstituted C1 to C20 alkyl group or a substituted or unsubstituted C6 to C20 aryl group.

12. The rechargeable lithium battery of claim 11, wherein
in Chemical Formula 3, at least one of Y¹ to Y⁵ is a halogen group.

13. The rechargeable lithium battery of claim 11, wherein
in Chemical Formula 3, Y¹ to Y⁵ are each a halogen group.

14. The rechargeable lithium battery of claim 11, wherein
in Chemical Formula 3, Y¹ to Y⁵ are each a fluoro group.

15. The rechargeable lithium battery of claim 11, wherein
in Chemical Formula 3, Z is NR²R³,
wherein R² and R³ are each independently a substituted or unsubstituted C1 to C10 alkyl group or a substituted or unsubstituted C3 to C10 cycloalkyl group.

16. The rechargeable lithium battery of claim 11, wherein
in Chemical Formula 3, Z is OR⁴,
wherein R⁴ is a substituted or unsubstituted C1 to C10 alkyl group or a substituted or unsubstituted C6 to C12 aryl group.

17. The rechargeable lithium battery of claim 1, wherein
the second compound is any one selected from the compounds listed in Group 1:

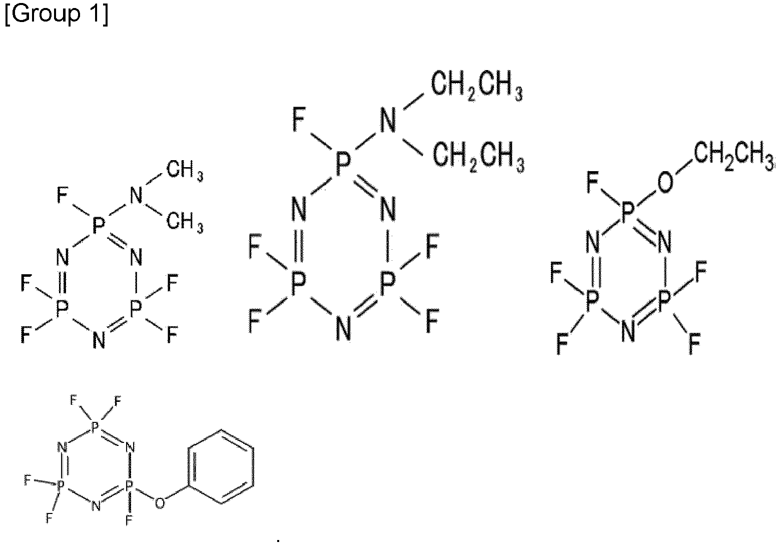

18. The rechargeable lithium battery of claim 1, wherein
the additive includes the first compound, and
the first compound is included in an amount of 0.1 to 5.0 parts by weight based on 100 parts by weight of the electrolyte.

19. The rechargeable lithium battery of claim 1, wherein
the additive includes the second compound, and
the second compound is included in an amount of 0.1 to 10 parts by weight based on 100 parts by weight of the electrolyte.

20. The rechargeable lithium battery of claim 1, wherein
the additive includes the first compound and the second compound,
the first compound and the second compound are included in an amount of 3.0 to 10 parts by weight based on 100 parts by weight of the electrolyte.

21. The rechargeable lithium battery of claim 1, wherein
the additive further includes at least one of other additives selected from vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), propene sultone (PST), propane sultone (PS), lithium tetrafluoroborate (LiBF₄), lithium difluorophosphate (LiPO₂F₂), and 2-fluoro biphenyl (2-FBP).

22. The rechargeable lithium battery of claim 1, wherein
the negative electrode active material is graphite or includes a Si composite and graphite together.

23. The rechargeable lithium battery of claim 22, wherein
the Si composite includes a core containing Si-based particles and an amorphous carbon coating layer.

24. The rechargeable lithium battery of claim 23, wherein
the Si-based particles include at least one of a Si-C composite, SiOₓ(0 < x ≤ 2), and a Si alloy.

25. The rechargeable lithium battery of claim 24, wherein
the Si-C composite includes a core including Si particles and crystalline carbon and an amorphous carbon coating layer on the surface of the core, and
an average particle diameter of the Si particles is 50 nm to 200 nm.

26. The rechargeable lithium battery of claim 1, wherein
the rechargeable lithium battery operates even at a high voltage of 4.4 V or more.
